# EUROPEAN PATENT SPECIFICATION

(11) **EP 1 589 255 B1**
(45) Date of publication and mention of the grant of the patent: **28.07.2010**
(21) Application number: 04009305.6
(22) Date of filing: 20.04.2004
(51) Int. Cl.: F16F 15/03

(54) **Electromagnetic shock absorber for vehicle**
Elektromagnetischer Stossdämpfer für Fahrzeuge
Amortisseur électromagnétique pour véhicules

(43) Date of publication of application: 26.10.2005
(73) Proprietor: KAYABA INDUSTRY CO., LTD., Minato-Ku, Tokyo 105-6190 (JP); The Foundation for the Promotion of Industrial Science, Tokyo 153-8505 (JP)
(72) Inventor: Kondou, Takuhiro Kayaba Industry Co., Ltd.,, Minato-ku Tokyo 105-6190 (JP); Suda, Yoshihiro, Tokyo 145-0071 (JP)
(74) Representative: Grünecker, Kinkeldey, Stockmair & Schwanhäusser Anwaltssozietät

(56) References cited:
- EP-A- 0 495 565
- WO-A-03/100291
- WO-A-03/104679
- US-A- 5 678 847

## Description

The present invention relates to a shock absorber inserted between a vehicle body and a vehicle axle for a vehicle or the like to damp vibrations from roads and in particular to an electromagnetic shock absorber for a vehicle with a mechanism that rotatably threads a screw shaft into a ball screw nut, thereby to convert the linear movement of a shaft force transmission member into the rotational movement of a motor shaft in a motor through the screw shaft, wherein an electromagnetic force caused by the rotational movement of the motor shaft is used as damping force.

Shock absorbers of an oil pressure type are in general known as those inserted between a vehicle body and a vehicle axle for a vehicle. This oil pressure- type shock absorber suspends the vehicle body, as well as improves riding comfort of the vehicle by damping input of vibrations from roads.

An electromagnetic damping shock absorber of the oil pressure type for a vehicle provides a high damping force, and to the contrary requires oil. Therefore, the electromagnetic shock absorber requires a sealing device to prevent leakage of the oil and also a complicated valve mechanism. In case the oil is leaked, it is possible that a desired damping force can not be obtained.

Under these circumstances a new electromagnetic shock absorber that does not require oil, air, a power source or the like has recently been studied and its paper has been published (Study of an Electromagnetic Suspension for an Automobile: The Automotive Technology Association, pre-edition issue of the Lecture, No. 4-00, 2000).

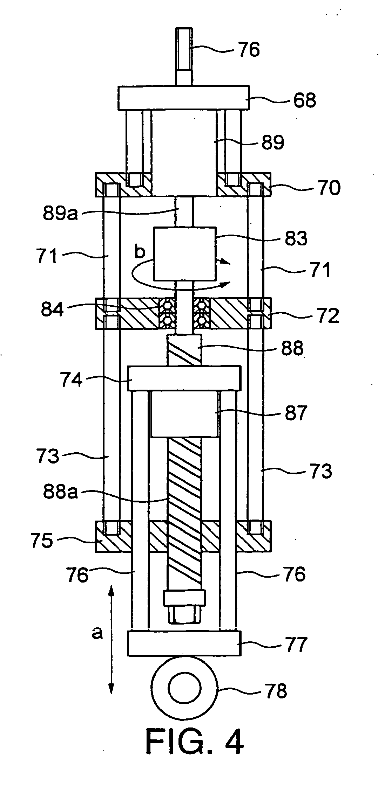

A basic structure of the electromagnetic shock absorber comprises, as shown in an example of Fig. 4, a ball screw nut 87, a flange 74 holding the ball screw nut 87, a flange 77 that an eye type bracket is secured to, a guide rod 76 connecting the flange 74 to the flange 77, a screw shaft 88 threaded rotatably into the ball screw nut 87, and a motor 89 connected through a coupling 83 and a shaft 89a to an upper end of the screw shaft 88.

And in the event of using this electromagnetic shock absorber as a suspension for a vehicle by inserting the electromagnetic shock absorber between the vehicle body and the vehicle axle, an upper end of the electromagnetic shock absorber is connected to the vehicle body through a flange 80 secured to a flange disposed on the motor 89 and a lower end thereof is connected to the vehicle axle through the eye type bracket 78.

In this case, the motor 89 is connected at a lower end thereof to a flange 72 through a flange 70 and a connecting rod 71, a ball bearing 84 is secured to an inner surface of the flange 72, and an upper portion of the screw shaft 88 is rotatably inserted inside the ball bearing 84.

Further, the flange 72 is connected to the flange 75 by a connecting rod 73, and the guide rod 76 is slidably inserted inside a bore formed in the flange 75, which allows only for a linear movement of the ball screw nut 87.

According to the concept of the suspension using the electromagnetic shock absorber, for example, upon a linear movement of the ball screw nut 87 in the directions of the arrow "a" caused by vibration inputs from roads, the linear movement of the ball screw nut 87 is converted into a rotational movement of the screw shaft 88 inside ball screw nut 87 as guided by balls in the ball screw nut 87 and a screw groove 88a on a periphery of the screw shaft 88.

Therefore, the rotational movement of the screw shaft 88 is transmitted through the coupling 83 attached to the upper end of the screw shaft 88 as the rotational movement of the shaft 89a in the directions of the arrow "b", thereby to generate an induced electromotive force in the motor 89. When each electrode in the motor 89 (not shown in particular) is short-circuited without a power source or connected to a control circuit for a desired electromagnetic force, an electrical current flows in the coil inside the motor 89 caused by the induced electromotive force and the motor 89 generates an electromagnetic force.

At this moment, the electromagnetic force is generated in the opposite direction to the rotational direction of the shaft 89a and a torque against rotation of the shaft 89a is generated due to the electromagnetic force, causing the rotation of the shaft 89a of the motor 89 to be restricted.

Then, restricting the rotation of the shaft 89a causes restricting rotation of the screw shaft 88 and as a result the torque acts as damping force that restricts the linear movement of the ball screw nut 87.

Namely, the action of the torque functions as damping force that restricts expanding and contracting movement of the electromagnetic shock absorber.

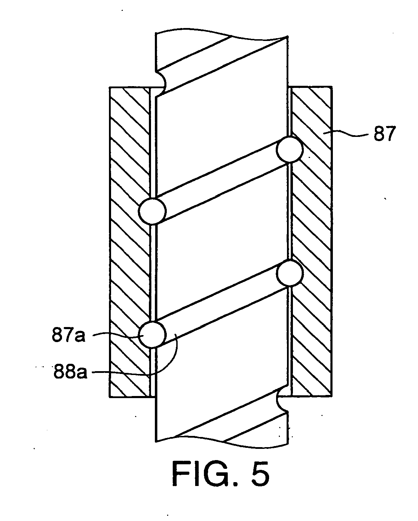

Herein, when attention is paid to the ball screw nut 87, as shown in Fig. 5, many balls 87a of a small diameter are disposed in the ball screw nut 87, these balls 87a engage with a spiral groove 88a of the screw shaft 88 to form a pair of screws and the screw shaft 88 is threaded into the ball screw nut 87 and rotated relative thereto.

Accordingly, as the ball screw nut 87 linearly moves in an axial direction the balls travel along the groove 88a, thereby to forcibly supply rotational force to the screw shaft 88 to rotate the screw shaft 88.

Thus, since the screw shaft 88 and the ball screw nut 87 move with each other smoothly, it is useful as the mechanism that converts a linear movement required for the electromagnetic shock absorber into a rotational movement.

The electromagnetic shock absorber without use of oil as described above, is very useful since the sealing mechanism to prevent leakage of oil or the complicated valve mechanism is not required, and on the other hand, brings about various problems as follows when in fact used in a suspension.

Namely since in general an electromagnetic shock absorber is disposed obliquely between a vehicle body and a vehicle axle, there is a case where forces acting on the shock absorber on vehicle running are input to the ball screw nut not only in the axial direction but also in the oblique direction as bending force by pushing-up inputs or vibrations due to vehicle turning, rugged roads, or the like.

The flange 75 bears this bending force, but a slight clearance between the flange 75 and the guide rod 76 or between the flange 75 and the screw shaft 88 is inevitably formed due to machining and there is a case where flange 75 can not bear the bending force completely caused by looseness as the clearance therebetween.

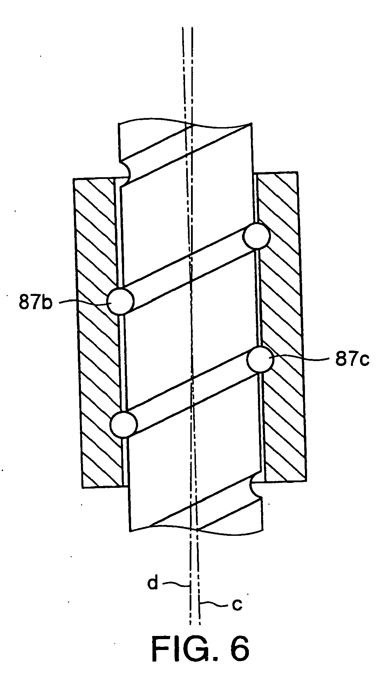

Likewise, there is looseness as the clearance between the ball screw nut 87 and the screw shaft 88 as produced due to machining, which tends to produce a loose fit therebetween.
As a result, as a large force is input to the electromagnetic shock absorber in the oblique direction, it is possible that, as shown in Fig. 6. the electromagnetic shock absorber gets inclined and thereby a central axis "c" of the screw shaft 88 deviates from a central axis "d" of the ball screw nut 87.

The reason for it is that since in the electromagnetic shock absorber the ball screw nut 87 is fitted and secured in an upper end of the guide rod 76, when the ball screw nut 87 receives a horizontal force from the eye bracket 78 attached to the lower end of the guide rod 76, a rotational moment centered around a portion where the ball screw nut 87 and screw shaft 88 are engaged is exerted on the ball screw nut 87. As a result, the central axis of the ball screw nut 87 is inevitably out of the central axis of the screw shaft 88 as shown in Fig. 6.
The ball screw nut 87 is attached to the screw shaft 88 only through many balls 87a and therefore, the loads exert concentrically on the part of the balls 87b, 87c due to deviation in the central axis therebetween, which tends to cause the ball 87b 87c or screw threads of the screw shaft 88 to be damaged.
Then, caused by the damage of the balls 87b, 87c or the screw threads of the screw shaft 88, the rotation of the screw shaft 88 and the ball screw nut 87 or the travel of the shock absorber in the expanding and contracting directions is not performed well, deteriorating operation of the electromagnetic shock absorber to cause failures thereof.

Further, since a suspension spring is not attached to the above-described electromagnetic shock absorber, when the above electromagnetic shock absorber is interposed between a vehicle axle and a vehicle body for a vehicle, there is a case where the vehicle body of some of the vehicles to which the above electromagnetic shock absorber is applied is lowered and the electromagnetic shock absorber does not work as a shock absorber.

WO 03/104679 A1 discloses an electromagnetic shock absorber comprising a vehicle body-side tube and a vehicle axle-side tube slidably inserted therein. A motor is connected inside the vehicle body-side tube to a screw shaft via a planetary gear mechanism. The screw shaft is rotatably threaded into a ball screw nut which is located inside the vehicle axle-side tube. The linear movement of the ball screw nut can be converted into rotational movement of the screw shaft. By transmitting said rotational movement to the shaft of the motor, an electromagnetic force can be generated. A torque caused by said electromagnetic force against the rotation of the shaft can be used in order to restrict the linear movement of the ball screw nut.

It is an objective of the present invention to provide an electromagnetic shock absorber that can be applied to a vehicle where the electromagnetic shock absorber uses electromagnetic force as damping force, namely enables generation of damping force without use of oil.

According to a first aspect of the present invention, said objective is solved by an electromagnetic shock absorber having the combination of features of independent claim 1.

According to a second aspect of the present invention, the aforesaid objective is solved by an electromagnetic shock absorber having the combination of features of independent claim 2.

Thus, the electromagnetic shock absorber for the vehicle in accordance with the first or second aspect of the present invention uses the electromagnetic force generated at the motor as damping force, and makes possible generation of the damping force without use of oil.

And since the axle-side tube is slidably inserted in the vehicle body-side tube, even when the bending force is exerted on the electromagnetic shock absorber for the vehicle, inclination of the axle-side tube toward the vehicle body-side tube is prevented. As a result, the central axis of the ball screw nut does not deviate from the central axis of the screw shaft, avoiding damages of the ball screw nut and the screw shaft, namely of the electromagnetic shock absorber for the vehicle.
Further, according to the electromagnetic shock absorber, in the case that the motor is connected inside the vehicle body-side tube, since key components of the electromagnetic shock absorber for the vehicle such as the motor, the ball screw nut, and the screw shaft are covered by the axle-side tube and the vehicle body-side tube. Therefore, when applied to a vehicle, rain, mud, stones or the like do not enter into the electromagnetic shock absorber or hit the key components directly. Damage of the electromagnetic shock absorber for the vehicle due to rain, mud, stones or the like can be effectively prevented.

In addition, since the suspension spring receivers are disposed in the electromagnetic shock absorber for the vehicle, a suspension spring can be attached to the electromagnetic shock absorber. Accordingly, when inserted between the vehicle body and the vehicle axle, it works as a shock absorber and can be applied to various vehicles.

Accordingly, the electromagnetic shock absorber without use of oil can be applied to a vehicle based upon using the electromagnetic force as damping force due to the above-described effects.

According to a third aspect of the present invention, the aforesaid objective is solved by an electromagnetic shock absorber having the combination of features of independent claim 3.

According to a fourth aspect of the present invention, the aforesaid objective is solved by an electromagnetic shock absorber having the combination of features of independent claim 4.

Accordingly, in the electromagnetic shock absorber for the vehicle of the third or the fourth aspect of the present invention, the electromagnetic force is generated at the coil and the torque based upon the electromagnetic force against rotation of the shaft can be used as damping force restricting a linear movement of the vehicle body-side tube or the vehicle axle-side tube. Therefore, this electromagnetic shock absorber also performs the same effects with the first or the second aspect of the present invention.

Moreover, the coil or the permanent magnet is attached directly inside the vehicle body-side tube or the vehicle axle-side tube and the frame is not required to cover it. Accordingly, compared with the arrangement where the motor is disposed inside the vehicle body-side tube or the vehicle axle-side tube, the heat the coil generates does not remain inside the vehicle body-side tube or the vehicle axle-side tube.

Also although the heat the coil generates is transmitted to the vehicle body-side tube or the vehicle axle-side tube, the heat can be effectively released by the vehicle body-side tube or the vehicle axle-side tube.

Thus, since it is possible to avoid temperature increase of the coil itself, insulating performance of the wires forming the coil is not deteriorated due to chemical change of insulating coating of the wires.

As a result, leakage of the coil is prevented and damage of the electromagnetic shock absorber for the vehicle is restricted.

Accordingly, the electromagnetic shock absorber without use of oil can be applied to a vehicle based upon using the electromagnetic force as damping force due to the above-described effects.

Due to the rotation prevention device, in the electromagnetic shock absorbers above, since the vehicle body-side tube or the vehicle axle-side tube does not rotate relative to the ball screw nut, especially when this electromagnetic shock absorber for the vehicle is used as a strut type and mounted on a vehicle body, the ball screw nut traveling together with the vehicle body-side tube or the vehicle axle-side tube rotates on vehicle turning, and then this rotational movement is transmitted to the motor shaft or the shaft. Thereby it is prevented that the electromagnetic force is generated at the motor or the coil to generate the damping force or the ball screw nut rotates for each vehicle turning, to linearly move the screw shaft, so that a vehicle height varies increasingly or decreasingly.

Preferred embodiments of the present invention are laid down in the subclaims.

Preferably, since the connecting pipe is disposed inside the vehicle body-side tube or the vehicle axle-side tube, and the ball screw nut is directly connected to the connecting pipe without connection to the vehicle body-side tube or the vehicle axle-side tube, even if jolts occur such that stones hit the electromagnetic shock absorber, the ball screw nut can be protected.

Additionally, if the connecting pipe shorter than the vehicle body-side tube or the vehicle axle-side tube is used, compared with the case where the ball screw nut is connected in the middle of the vehicle body-side tube or the vehicle axle-side tube, the ball screw nut can be placed in the middle of the vehicle body-side tube or the vehicle axle-side tube only by inserting the connecting pipe connected to the ball screw nut inside the vehicle body-side tube or the vehicle axle-side tube, providing an easy machining for it.

Preferably, the vehicle mounting portion is equipped with the upper suspension spring receiver connected between the vehicle body-side tube and the motor, and a suspension spring is inserted between the upper suspension spring receiver and the lower suspension spring receiver.

In this preferred embodiment, since the motor is arranged inside the vehicle body defined by a car body, which prevents rain, mud, or stones from directly hitting the motor, failures of the motor caused by it can be avoided.

Also the electromagnetic shock absorber for the vehicle can have a sufficient stroke as a shock absorber because the motor in length is not added as the length of the shock absorber itself.

Further, this electromagnetic shock absorber for the vehicle can work as a shock absorber between the vehicle body and the vehicle axle because of the suspension spring provided, and can be applied to various vehicles.

Preferably, the vehicle mounting portion is equipped with the upper suspension spring receiver connected to a tip of the vehicle body-side tube or the motor, and a suspension spring is inserted between the upper suspension spring receiver and the lower suspension spring receiver.

Accordingly, this electromagnetic shock absorber for the vehicle can work as a shock absorber between the vehicle body and the vehicle axle because of the suspension spring provided, and can be applied to various vehicles.

Preferably, the vehicle mounting portion is constructed to include a bracket connectable to a vehicle, a bush held and surrounded by the bracket, and a rolling bearing held and surrounded by the bush, wherein the upper suspension spring receiver is attached to the bracket, and the vehicle body-side tube or the motor is fitted in an inner surface of the rolling bearing.

In the above preferred embodiment, especially when this electromagnetic shock absorber for the vehicle is used as a strut type and mounted on a vehicle body, the electromagnetic shock absorber itself is rotatable relative to the vehicle body on vehicle turning, thereby to restrict rotation of the vehicle axle-side tube relative to the vehicle body-side tube. As a result, the ball screw nut rotates and then this rotation movement is transmitted to the motor shaft or the shaft. Thereby it is prevented that the electromagnetic force is generated at the motor or the coil to generate the damping force or the ball screw nut rotates for each vehicle turning, to linearly move the screw shaft, so that the vehicle height varies increasingly or decreasingly.

Further preferred embodiments are laid down in the further subclaims.

In the following, the present invention is explained in greater detail by means of embodiments thereof in conjunction with the accompanying drawings, wherein:
Fig. 1 is a side cross sectional view of an electromagnetic shock absorber for a vehicle of a first embodiment.
Fig. 2 is a side cross sectional view of an electromagnetic shock absorber for a vehicle of a second embodiment.
Fig. 3 is a side cross sectional view of an electromagnetic shock absorber for a vehicle of a third embodiment.
Fig. 4 is a schematic view of an electromagnetic shock absorber of the related art.
Fig. 5 is a side cross sectional view of a state where a screw shaft is threaded into a ball screw nut.
Fig. 6 is a side cross sectional view of a state where a central axis of a ball screw nut is deviated from a central axis of a screw shaft.

Selected embodiments will now be explained with reference to the drawings. It will be apparent to those skilled in the art from this disclosure that the following description of the embodiments are provided for illustration only, and not for the purpose of limiting the technical teaching.

### First Embodiment

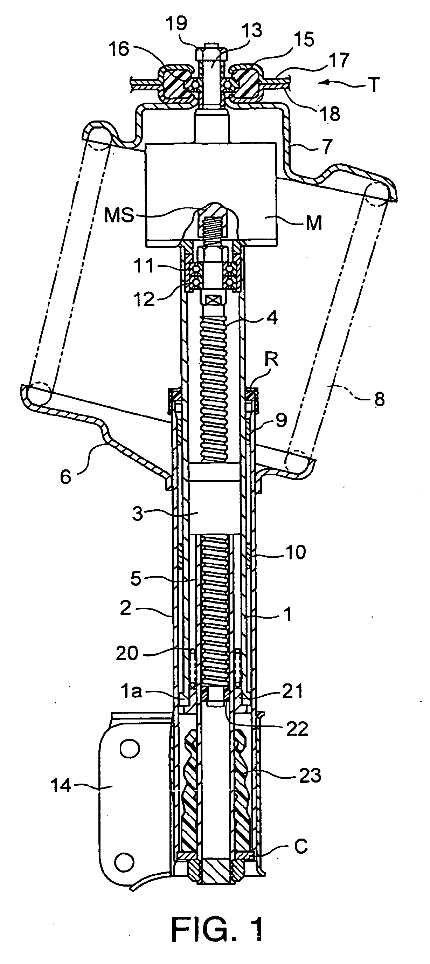

An electromagnetic shock absorber for a vehicle of a first embodiment, comprises, as shown in Fig. 1, an outer tube 2 that is a vehicle axle-side tube, an inner tube 1 that is a vehicle body-side tube that is slidably inserted inside the outer tube 2 through bearing members 9, 10, a connecting pipe 5 connected co-axially inside the outer tube 2, a motor "M" connected to an upper end of the inner tube 1 and having electrodes that are short-circuited, a ball screw nut 3 connected to an upper end of the connecting pipe 5, a screw shaft 4 connected to a motor shaft "MS" of the motor "M" inside a frame 32 of the motor "M", a lower suspension spring receiver 6 secured to a peripheral side face of the outer tube 2, a vehicle mounting portion "T" equipped with an upper suspension spring receiver 7attached through a nut 19 to a shaft 13 disposed above the motor "M", and a suspension spring 8 interposed between the upper suspension spring receiver 7 and the lower suspension spring receiver 6, which is constructed to be a strut type as shown in Fig. 1.

As explained in detail below, the outer tube 2 is cylindrical and has a lower end sealed by a cap "C". An axle bracket 14 connected to a vehicle axle side is disposed at a lower side surface of the outer tube 2 and the lower suspension spring receiver 6 is secured to a peripheral side face of the outer tube 2.

The inner tube 1 is cylindrical and the motor "M" is connected at an upper end of the inner tube 1 and a spring seat 21 equipped with a cushion spring 20 is fitted in a lower end of the inner tube 1, which is slidably inserted inside the outer tube 2. A lip "R" is disposed at an opening end of the outer tube 2 and slides with the inner tube 1. Therefore, rain, dusts, or the like do not enter inside the electromagnetic shock absorber for the vehicle.

And a key 1a is disposed on an outer surface of the inner tube 1 at a lower end thereof and a key groove (not shown) is disposed along an axial direction on an inner surface of the outer tube 2. The key 1a is engaged with the key groove, so that the outer tube 2 does not rotate relative to the inner tube 1.

However, the key 1a and the key groove are disposed to prevent the inner tube 1 from rotating relative to the ball screw nut 3 described later. Namely, the ball screw nut 3 is disposed at a tip of the connecting pipe 5 connected to the outer tube 2 and therefore, the inner tube 1 does not rotate relative to the ball screw nut 3 due to the relationship between the key 1a and the key groove. Instead of arranging the key 1a and the key groove between the inner tube 1 and the outer tube 2, the key 1a and the key groove may be disposed between an outer surface of the connecting pipe 5 and an inner surface of the inner tube 1 or between an outer surface of the ball screw nut 3 and the inner surface of the inner tube 1, and also prevention of rotation of the inner tube 1 to the outer tube 2 may be carried out by constructions other than a key and a key groove.

As describe above, the inner tube 1 and the outer tube 2 slide and contact with each other through the bearing members 9, 10, and therefore, in the event the bending force is exerted on the electromagnetic shock absorber for the vehicle, the outer tube 2 is not inclined relative to the inner tube 1.

The connecting pipe 5 threaded into the cap "C" co-axially with the outer tube 2, as well as a cushion 23 contacted with the cap "C" are disposed inside the outer tube 2. The cushion 23, when the electromagnetic shock absorber for the vehicle is contracted at a maximum, cushions jolts produced between a spring seat 21 disposed at a lower end of the inner tube 1 and the cap "C" and protects the electromagnetic shock absorber, and also prevents interference of the ball screw nut 3 described later with the motor "M" connected to an upper side of the inner tube 1. On the other hand, when the electromagnetic shock absorber for the vehicle is expanded at a maximum the ball screw nut 3 is protected by a way that the above-described cushion spring 20 gets in contact with the ball screw nut 3.

The connecting pipe 5 is cylindrical and, as described above, has a lower end threaded into the cap "C" disposed at a lower end of the outer tube 2, to be inserted into the inner tube 1, as well as has an upper end the ball screw nut 3 is connected to. Accordingly, the connecting pipe 5 moves together with the outer tube 2.

Next, the motor "M" connected to an upward side of the inner tube 1 will be explained. The motor "M" comprises a cylindrical frame as a yoke (not shown), a permanent magnet attached to the frame so as to generate magnetic field inside the frame, a motor shaft "MS" inserted rotatably into the frame through a bearing, a coil wound at a position opposed to the permanent magnet on the motor shaft "MS", a commutator disposed on an outer surface of the motor shaft "MS", and a brush attached to a brush holder. The motor "M" is well known and is connected to an upper end of the inner tube 1.

The motor "M" in the above embodiment is a direct current motor, but may be various motors such as a brushless motor, an alternate current motor, and an induction motor other than a motor with a direct current brush. Each electrode of the motor "M" is short-circuited or connected to a control apparatus.

The screw shaft 4 is threaded at an upper end into the motor shaft "MS" of the motor "M", as well as inserted rotatably inside the inner tube 1 through the bearings 11, 12. The cushion 22 is disposed in a tip of a lower end of the screw shaft 4 a spiral groove (not shown) of which is threaded in the ball screw nut 3. As the ball screw nut 3 moves to a lower end of the screw shaft 4, namely, when the electromagnetic shock absorber for the vehicle is expanded at a maximum, the cushion 22 prevents the ball screw nut 3 from slipping off the screw shaft 4, as well as eases jolts caused by interference of the ball screw nut 3 with the spring seat 21, to prevent the damage of the ball screw nut 3.

In the embodiment, the upper end of the screw shaft 4 is threaded and connected into the motor shaft "MS", but only if the rotation movement of the screw shaft 4 is transmitted to the motor shaft "MS", the connection method thereof is not limited to a threaded one, but other conventional methods may be used. For example, the screw shaft 4 and the motor shaft "MS" may be integrally molded.

Alternatively, a power transmission device may be disposed between the screw shaft 4 and the motor shaft "MS", which conveys the rotation movement of the screw shaft 4 to the motor shaft "MS". In this case as the power transmission device (not shown) is a gear disposed in a tip of the motor shaft "MS" to be a sun gear, and further a sun gear is disposed in an inner surface of the inner tube 1, as well as a planetary gear is disposed in the screw shaft 4. Namely, a gear mechanism may be constructed such that the planetary gear is interposed between the sun gear in the motor shaft "MS" and the sun gear in the inner tube 1 and each gear is engaged with each other. Further, alternatively a torsion bar may be used between the motor shaft "MS" and the screw shaft 4.

As described above, in the case that the gear mechanism is used as the power transmission device, a rotation speed of the motor shaft "MS" increases or decreases relative to the rotation speed of the screw shaft 4 based upon a gear ratio of each gear. In the case of use of the torsion bar, the torsion bar cushions the rotation speed of the screw shaft 4 to some extent. Therefore, especially when the rotation speed of the screw shaft 4 varies, that variation can be transmitted delayed in time to the motor shaft "MS".

As for the ball screw nut 3, although the structure thereof is not shown in the figure, for example, a spiral ball holding portion is formed in an inner surface of the ball screw nut to be engaged with the spiral screw groove of the screw shaft and many balls are disposed in the holding portion. A passage communicating between both ends of the spiral ball holding portion is disposed inside the ball screw nut for the balls to be circulated therein. In case the screw shaft is threaded into the ball screw nut, the balls in the ball screw nut are engaged in the spiral screw groove of the screw shaft, and as a result of the rotational movement of the screw shaft, the balls themselves rotate due to friction with the screw groove of the screw shaft, thereby to make possible a more smooth movement thereof, compared with a rack-and-pinion mechanism or the like.

As described above, the ball screw nut 3 is rotatably attached to the screw shaft 4 along the spiral groove where, as the ball screw nut 3 linearly moves up or down, the balls in the ball screw nut 3 travel up or down. At this moment, since the balls move along the spiral screw groove of the screw shaft 4, the screw shaft 4 is forcibly rotated.

Namely, the linear movement of the ball screw nut 3 is converted into the rotational movement of the screw shaft 4 by the above mechanism. Accordingly, since the ball screw nut 3 moves integrally with the outer tube 2 through the connecting pipe 5, the linear movement of the outer tube 2 is converted into the rotational movement of the screw shaft 4.

The vehicle mounting portion "T" comprises a pair of an upward bracket 17 and a downward bracket 18 connectable to the vehicle, an upper suspension spring receiver 7 attached to the bracket 18, the bush 15 held and surrounded by the pair of the brackets 17, 18, and the rolling bearing 16 held and surrounded by the bush 15 where the shaft 13 disposed at the upper end of the motor "M" is fitted in an inner surface of the rolling bearing 16.

The brackets 17, 18 are respectively formed like a disc having a concave portion in an inner surface thereof to hold and surround the bush 15, and include a plurality of bores (not shown) in the vicinity of a periphery thereof into which bolts threaded into a vehicle body are inserted.

The bush 15 is held and surrounded by the concave portion of the brackets 17, 18 and the rolling bearing 16 is held by a notch formed in an inner surface of the bush 15. The shaft 13 is engaging with the inner surface of the rolling bearing 16, while the vehicle mounting portion "T" is secured to the shaft 13 by the nut 19. As a result, the electromagnetic shock absorber for the vehicle is rotatable relative to the vehicle mounting portion "T".

However, according to the above construction, since in the electromagnetic shock absorber for the vehicle, key components such as the ball screw nut 3, or the screw shaft 4 are covered by the inner tube 1 and the outer tube 2, when applied to a vehicle, rain, mud, stones, or the like are not entered into the electromagnetic shock absorber for the vehicle and do not hit the above key components directly. Accordingly, the damage of the electromagnetic shock absorber caused by the above is avoided effectively.

In addition, since the upper and the lower suspension spring receivers are disposed in the electromagnetic shock absorber for the vehicle and the suspension spring is interposed between the suspension spring receivers, even if the electromagnetic shock absorber is interposed between the vehicle body and the vehicle axle, it can work as a shock absorber and be applied to various vehicles.

However, a basic mode of the electromagnetic shock absorber for the vehicle as shown in Fig.1 is what is called an erect type electromagnetic shock absorber where the inner tube which the motor is connected to is attached to the vehicle body and the outer tube is attached to the vehicle axle, but may be an inverted type where the vehicle body-side tube is the outer tube and the vehicle axle-side tube is the inner tube, and also the motor can be connected, not to the inner tube as the vehicle body-side tube, but the outer tube as the vehicle axle-side tube.

Further, as shown in the figure, the motor "M" is connected to the upper end of the inner tube 1, but may be connected inside the inner tube 1 where, since not only the ball screw nut 3 and the screw shaft 4 but also the motor "M" are covered by the inner tube 1 and the outer tube 2, even if applied to a vehicle, rain, mud, or stones are not entered into the electromagnetic shock absorber for the vehicle and do not hit the motor "M" directly. Accordingly, the damage of the electromagnetic shock absorber caused by the above is avoided more effectively.

Also, in the case (not shown) that the motor "M" is connected to the outer tube 2, the ball screw nut 3 may be connected directly to the inner tube 1 without the connecting pipe 5. And if the connecting pipe 5 shorter than the inner tube 1 is herein used, compared with the case the ball screw nut 3 is connected to an intermediate portion of the inner tube 1, the ball screw nut 3 can be positioned in the intermediate portion of the inner tube 1 only by inserting the connecting pipe 5 connected to the ball screw nut 3 inside the inner tube 1, providing an easy machining for them.

Operations thereof will be explained below. In the electromagnetic shock absorber for the vehicle, the inner tube 1 is attached to the vehicle body of a vehicle through the vehicle mounting portion "T" and the outer tube 2 is attached to the vehicle axle through the axle bracket 14 where, as pushing inputs or vibrations are entered from roads or the like on vehicle running, the electromagnetic shock absorber expands or contracts.

Namely, the outer tube 2 linearly moves along the outer surface of the inner tube1. Then the ball screw nut 3 connected to the tip of the connecting pipe 5 connected to the outer tube 2 also linearly moves, and the linear movement of the ball screw nut 3 is converted into the rotational movement of the screw shaft 4 as described above, which finally is transmitted to the motor shaft "MS" of the motor "M".

In the case that the power transmission device is disposed between the screw shaft 4 and the motor shaft "MS" and the power transmission device is a planetary gear, the rotational speed of the motor shaft "MS" of the motor "M" increases or decreases more than the rotational speed of the screw shaft4 depending upon a gear ratio of the planetary gear.

Thus, as the motor shaft "MS" of the motor "M" rotates, the coil wound around the motor shaft "MS" crosses magnetic flux that the permanent magnet attached to the frame of the motor "M" forms, thereby to produce an induced electromotive force. Then, when each electrode of the motor "M" is short-circuited, namely when the coil is short-circuited, an electrical current flows in the coil due to an induced electromotive force, to produce an electromagnetic force, namely a torque against rotation of the motor shaft "MS".

As a result, the torque against rotation of the motor shaft "MS" restricts the rotational movement of the motor shaft "MS". Accordingly, the rotation of the screw shaft 4 is restricted by restricting the rotation of the motor shaft "MS" and as a result the linear movement of the ball screw nut 3 and finally the linear movement of the outer tube 2 to which the ball screw nut 3 is connected through the connecting pipe 5 are restricted. Therefore, the torque against the rotation of the motor shaft "MS" due to the electromagnetic force acts as damping force.

As described above, in the electromagnetic shock absorber for the vehicle, the linear movement of the outer tube 2 in the upward and downward direction relative to the inner tube 1 is converted into the rotational movement of the screw shaft 4, then to produce the rotational movement of the motor shaft "MS". Thereby an electromagnetic force is generated at the motor "M" and used as damping force. In the embodiment, since a strut type electromagnetic shock absorber is used, the rolling bearing 16 is disposed in the vehicle mounting portion "T" and the electromagnetic shock absorber for the vehicle can rotate relative to the vehicle mounting portion "T".

Then, the electromagnetic shock absorber rotates relative to the vehicle mounting portion "T" on vehicle turning, but also the electromagnetic shock absorber itself can rotate relative to the vehicle body. As a result, rotation of the outer tube 2 relative to the inner tube 1 is restricted and the ball screw nut 3 rotates. This rotation of the ball screw nut 3 is transmitted to the motor shaft or the shaft. Accordingly, it is prevented that damping force by the electromagnetic force produced at the motor or the coil is produced or that the vehicle height changes by the linear movement of the screw shaft caused by rotation of the ball screw nut for every vehicle turning.

Further, the key groove is formed in the inner surface of the outer tube 2, as well as the key 1a is disposed in the inner tube 1, and the outer tube 2 does not rotate relative to the inner tube 1, either. As a result, the ball screw nut 3 does not rotate relative to the inner tube1 either. Namely, on vehicle turning the above problem is restricted due to the entire electromagnetic shock absorber for the vehicle rotating on the rolling bearing 16, and the above problem is avoided more effectively with the key 1a and the key groove.

Moreover, in the strut type electromagnetic shock absorber the above problem is prevented especially effectively and besides, it is needless to say that in case the electromagnetic shock absorber is applied where the ball screw nut and the vehicle body-side tube or the vehicle axle-side tube rotate and the above problem tends to occur, the like effect can be obtained.

Also, in the above description, the torque against rotation of the motor shaft "MS" is produced by short-circuiting each electrode of the motor "M". However, alternatively, for example, the motor "M" is connected to an electrical circuit an internal resistance of which varies depending on magnitude of an induced electromotive force, and an amount of an electrical current flowing in the motor "M" due to the induced electromotive force may be modified by this electrical circuit. By doing so, the electrical current flowing in the motor "M" can be modified and then the damping force produced at the electromagnetic shock absorber for the vehicle can be also modified.

In the case that the motor "M" is connected to the control apparatus, since a desired damping force can be obtained by modifying the electrical current amount flowing in the motor "M", it is not necessary to supply the electrical current to the motor "M" positively from the control apparatus and it is required only to supply an electrical power necessary for operating the control apparatus. Accordingly, a power economy improves.

Herein, as described above, bearing members 9, 10 are disposed between the inner tube 1 and the outer tube 2 and supported at two points, upward and downward, even if bending force is exerted on the electromagnetic shock absorber for the vehicle from the oblique direction due to vehicle turning, rugged roads or the like on vehicle running, the outer tube 2 does not incline relative to the inner tube 1, to prevent the central axis of the screw shaft 4 from deviating from the central axis of the ball screw nut 3.

Namely, since the respective central axes of the screw shaft and the ball screw nut are matched, the loads are not exerted concentrically on part of the balls of the ball screw nut, thereby to avoid damage of the balls or the screw threads.

Also, since the damage of the balls or the screw threads is prevented, the rotation of the screw shaft to the ball screw nut or the travel of the electromagnetic shock absorber for the vehicle in the expanding and contracting directions is performed smoothly.

Accordingly, due to maintaining each smooth operation thereof the operations of the electromagnetic shock absorber for the vehicle are not damaged and as a result failures thereof are prevented.

Moreover, as described above, if the power transmission device is disposed and used as the gear mechanism such as the planetary gear, it is possible to increase or decrease the rotational speed of the motor shaft "MS" of the motor "M" more than the rotational speed of the screw shaft 4, and a desired damping force can be produced by a proper combination of a gear ratio of each gear. However, conventional devices such as a frictional wheel other than the planetary gear may be used as the power transmission device.

Namely, when the electromagnetic shock absorber is in reality applied to a vehicle, if a gear ratio of each gear is selected properly, the damping force required corresponding to an applied vehicle model can be obtained without varying the specification of the motor "M" based upon the applied vehicle model.

Also, since the damping force can be varied corresponding to a gear ratio, in the case that a large damping force is required, there is no need to enlarge the motor "M" used for the electromagnetic shock absorber for the vehicle. Accordingly, the costs can be reduced.

Moreover, in the case of using a torsion bar as the power transmission device, when the rotational speed of the screw shaft varies caused by variations of expanding or contracting speed of the electromagnetic shock absorber for the vehicle, the variation can be transmitted delayed in time to the motor shaft. Namely, an inertia moment of a rotator of the motor can be produced time-lagging behind at a starting point of expansion and contraction or at the variation of expansion or contraction speed. Herein, the inertia moment of the rotator of the motor acts so as to restrict the rotational movement of the screw shaft, so that the electromagnetic shock absorber for the vehicle produces damping force. As a result, that time-delays production of damping force due to the inertia moment of the rotator of the motor, and the damping force caused by the inertia moment of the rotator of the motor at an initial period of variation of expansion and contraction speed of the electromagnetic shock absorber for the vehicle produced prior to production of the damping force due to the electromagnetic force can be reduced.

Accordingly, various problems such as the difficulty of controlling damping force produced by the inertia moment of the above-described rotator can be reduced as much as possible, and the damping force production caused by the inertia moment of the rotator of the motor at an initial period of variation of expansion and contraction speed of the electromagnetic shock absorber for the vehicle can be reduced. As a result, when the electromagnetic shock absorber for the vehicle is applied to a vehicle, deterioration of riding comfort in a vehicle can be avoided.

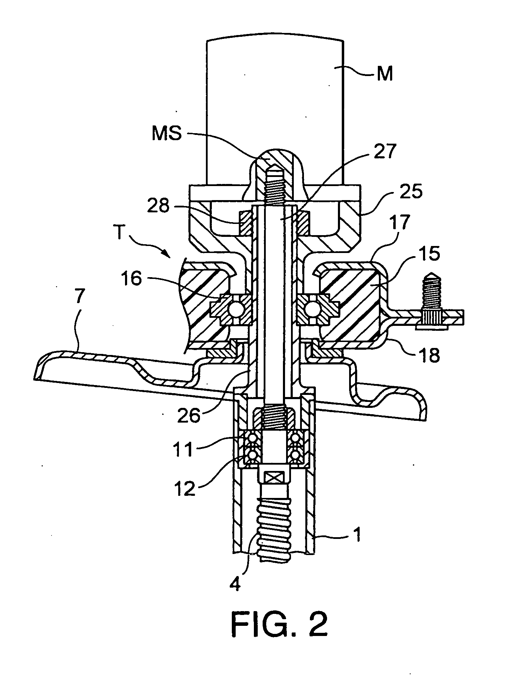

A second embodiment with reference to Fig. 2 will be explained as follows. Components herein identical to the components of the above-described embodiment are not explained in detail, only with the numerals attached.

As shown in Fig. 2, the second embodiment is constructed such that a motor bracket 25 connecting a tube bracket 26 to the motor "M" is connected to an upper end of the inner tube 1 that is the vehicle body-side tube, and the electromagnetic shock absorber for the vehicle is attached to the vehicle mounting portion "T" by sandwiching the rolling bearing 16 of the vehicle mounting portion "T" with the tube bracket 26 and the motor bracket 25. However, the electromagnetic shock absorber for the vehicle, the vehicle mounting portion "T", and the motor "M" are the same as in the above-described embodiment.

The tube bracket 26 is cylindrical and connected at a lower end to the inner tube 1, and around a periphery of the intermediate portion is formed disposed the step for sandwiching the rolling bearing 16.

The motor bracket 25 is cylindrical with a diameter thereof enlarged at an upward side, and fits the tube bracket 26 into a lower and inner surface therein, and sandwiches the rolling bearing 16 with the lower end thereof and the step of the tube bracket 26.

A connecting shaft 27 connected to an upper end of the screw shaft 4 is inserted in the inner surface of the tube bracket 26 and the motor bracket 25 and threaded at an upper end thereof into the motor shaft "MS" of the motor "M", and the motor bracket 25 is secured to the tube bracket 26 by a nut 28 threaded at an upward side of the connecting shaft 27.

Herein, the respective brackets 25, 26 are shaped like the above-described, but different shapes thereof may be made if the screw shaft 4 is rotatably connected to the motor shaft "MS" and the electromagnetic shock absorber for the vehicle is attached to the rolling bearing 16.

However, the connecting shaft 27 connected to the upper end of the screw shaft 4 is threaded and connected to the motor shaft "MS" by screwing, and the connection method thereof is not limited to the screwing, but other conventional methods may be used only if the rotational movement of the screw shaft 4 is transmitted to the motor shaft "MS". Also the screw shaft 4, the connecting shaft 27, and the motor shaft "MS" may be integrally molded in the same way with the above-described embodiment.

In regards to the operations, as the above embodiment described, the ball screw nut moves up or down by expansion and contraction of the electromagnetic shock absorber for the vehicle, to cause rotational motion of the screw shaft 4, which is restricted by an electromagnetic force in the motor "M" generated based upon rotation of the motor shaft "MS" connected to the screw shaft 4. As a result, the expansion and contraction of the electromagnetic shock absorber for the vehicle is restricted. Namely a damping force can be produced. Accordingly, the effects identical to those of the above-described embodiment can be obtained.

Moreover, the motor "M" is disposed over the vehicle attaching portion "T" and placed inside the vehicle body defined by the car body. Therefore, it is avoidable that rain, mud, or stones hit directly the motor, to effectively prevent failures of the motor caused by it.

With this construction, consideration for motor length in designing the electromagnetic shock absorber for the vehicle is unnecessary and a stroke of the electromagnetic shock absorber necessary for a shock absorber of an applied vehicle can be obtained sufficiently.

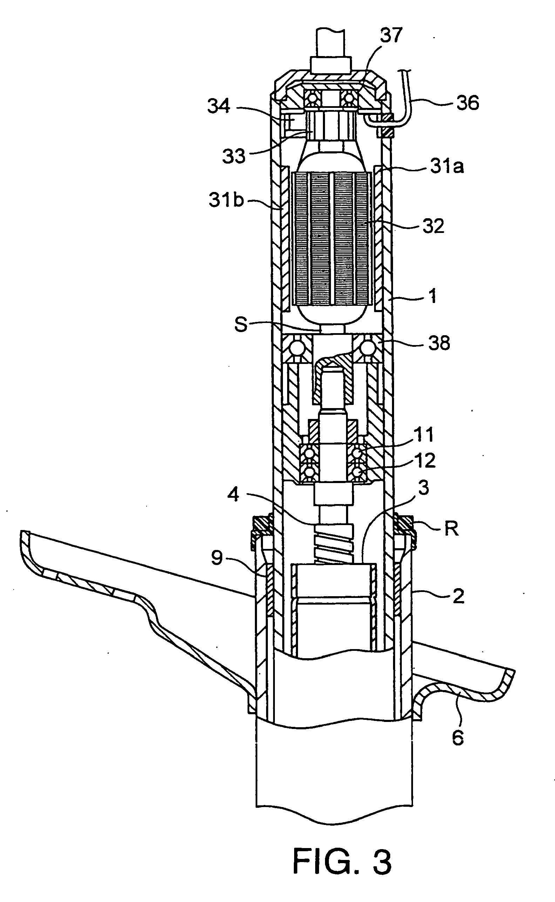

Finally a third embodiment shown in Fig. 3 will be explained. The third embodiment, as shown in Fig. 3, includes permanent magnets 31a, 31b attached inside the inner tube 1, to produce a magnetic field inside the inner tube 1, a shaft "S" rotatably inserted through bearings 37, 38 inside the inner tube 1, a coil 32 wound on the shaft "S" at a position opposite to the permanent magnets 31a, 31b, a commutator 33 disposed on an outer periphery of the shaft "S" likewise, and a brush 34 attached to a brush holder (not shown). Thus the inner tube 1 functions as a yoke and the other components of the third embodiment are identical to those of the first embodiment described above.

The brush 34 is connected through the brush holder to an electrical wire 36, which includes two conductors (not shown) connected respectively to the brush 34, and tips thereof are short-circuited. Hence, in this case it is not necessary that the electrical wire 36 is short-circuited outside the inner tube 1 and the brushes 34 each other may be short-circuited inside the inner tube 1.

The single brush 34 is, however, shown in Fig. 3 and in fact a pair of the brushes 34 are disposed, which are respectively adapted to contact the commutator 33 and the coil 32 is connected to the commutator 33. Accordingly, the coil 32 crosses the magnetic field generated at the permanent magnets 31a, 31b upon rotation of the shaft "S", to produce an induced electromotive force. For reasons of the short-circuit of the coil 32 through the commutator 33, the brush 34, and the electrical wire 36 an electric current flows in the coil 33 to generate an electromagnetic force.

With the third embodiment, the shaft "S" rotates due to expansion and contraction of the electromagnetic shock absorber for the vehicle and the electric current caused by the induced electromotive force flows in the coil, enabling generation of the electromagnetic force. Therefore, it is needless to say that the effects of the third embodiment identical to those of the above-described embodiment can be performed and moreover the coil 32 or the permanent magnets 31a, 31b are directly attached inside the inner tube 1 and it is not necessary to dispose a frame for covering them. As a result in comparison with disposition of the motor inside the inner tube 1, it is prevented that heat generated by the coil 32 is caught inside the inner tube 1.

Although the heat generated by the coil 32 is transmitted to the inner tube 1, the heat can be effectively released through the inner tube 1.

Accordingly an increase in temperature of the coil itself can be avoided and deterioration of an insulating performance caused by chemical changes in the insulating coating of the conductors forming the coil can be prevented.

Then leakage of the coil is prevented and damage of the electromagnetic shock absorber for the vehicle is restricted. However, with the embodiment, a strut-type electromagnetic shock absorber for a vehicle is explained , but the present teaching is designed to provide an electromagnetic shock absorber which can be applied to a vehicle and therefore, it is apparent that the present teaching can be embodied to an electromagnetic shock absorber other than a strut type thereof.
As explained above, accordingly, an electromagnetic force generated at a motor is used as a damping force, namely, a damping force can be produced without any special use of oil.

Since the axle-side tube is slidably inserted in the vehicle body-side tube, even when the bending force is exerted on the electromagnetic shock absorber for the vehicle, inclination of the axle-side tube toward the vehicle body-side tube is prevented. As a result, the central axis of the ball screw nut does not deviate from the central axis of the screw shaft, avoiding damages of the ball screw nut and the screw shaft.

Further, in the case that the motor is connected inside the vehicle body-side tube, since key components of the electromagnetic shock absorber for the vehicle such as the motor, ball screw nut, and screw shaft are covered by the axle-side tube and the vehicle body-side tube. Therefore, when applied to a vehicle, damage of the electromagnetic shock absorber for the vehicle due to the rain, mud stones or the like can be effectively prevented.

In addition, since the suspension spring receivers are disposed in the electromagnetic shock absorber for the vehicle, when inserted between the vehicle body and the vehicle axle, it works as a shock absorber and can be applied to various vehicles.

Further, in the case of using a planetary gear as the power transmission device, a
desired damping force by a proper combination of gear ratios of the respective gears can be obtained. However, as the power transmission device, conventional devices such as a frictional wheel other than the planetary gear may be used.

With this, a desired damping force corresponding to an applied vehicle can be obtained without alternation of the specification of the motor.

In case a large damping force is required, since a damping force can be varied based upon a gear ratio, it is not necessary to enlarge size of the motor used in the electromagnetic shock absorber.

Moreover, in the case of using a torsion bar as the power transmission device, an inertia moment of a rotator of the motor can be produced time-lagging behind at a starting point of the expansion and the contraction of the electromagnetic shock absorber or at the variation of expansion or contraction speed thereof. As a result, the damping force caused by the inertia moment of the rotator of the motor at an initial period of variation of expansion and contraction speed of the electromagnetic shock absorber for the vehicle produced prior to production of the damping force due to the electromagnetic force can be reduced.

Accordingly, various problems such as the difficulty of controlling damping force produced by the inertia moment of the above-described rotator can be reduced as much as possible, and the damping force production caused by the inertia moment of the rotator of the motor at an initial period of variation of expansion and contraction speed of the electromagnetic shock absorber for the vehicle can be reduced. As a result, when the electromagnetic shock absorber for the vehicle is applied to a vehicle, deterioration of riding comfort in a vehicle can be avoided.

Moreover, in the case of attaching the coil or the permanent magnet directly inside the vehicle body-side tube or the vehicle axle-side tube, the frame is not required to cover it. Accordingly, compared with the arrangement where the motor is disposed inside the vehicle body-side tube or the vehicle axle-side tube, the heat the coil generates does not remain inside it.

Also although the heat the coil generates is transmitted to the vehicle body-side tube or the vehicle axle-side tube, the heat can be effectively released by the vehicle body-side tube or the vehicle axle-side tube.

Accordingly, since it is possible to avoid temperature increase of the coil, insulating performance of the wires forming the coil is not deteriorated due to chemical change of insulating coating of the wires.

As a result, leakage of the coil is prevented and damage of the electromagnetic shock absorber for the vehicle is restricted.

## Claims

1. An electromagnetic shock absorber for a vehicle that comprises:
a vehicle mounting portion (T) configured to support the electromagnetic shock absorber relative to rotate to a vehicle body;
a vehicle body-side tube (1);
a vehicle axle-side tube (2) slidably inserted inside or outside the vehicle body-side tube (1.) through bearing members (9,10);
an upper suspension spring receiver (7) attached to the vehicle body-side tube (1);
a lower suspension spring receiver (6) attached to the vehicle axle-side tube (2);
a motor (M) connected inside or outside the vehicle body-side tube (1):
a ball screw nut (3) disposed inside the vehicle axle-side tube (2), the ball screw nut (3) traveling together with the vehicle axle-side tube (2);
a screw shaft (4) that is connected directly or through a power transmission device to a motor shaft (MS) of the motor (M) or that is formed integral with the motor shaft (MS), the screw shaft (4) being rotatably threaded into the ball screw nut (3),
a linear movement of the ball screw nut (3) being converted into a rotational movement of the screw shaft (4), which is transmitted to the motor shaft (MS),
thereby to generate an electromagnetic force, and a torque caused by the electromagnetic force against rotation of the motor shaft (MS) is used as damping force for restricting the linear movement of the vehicle axle-side tube (2); and
a rotation prevention device that prevents the vehicle body-side tube (1) from rotating relative to the ball screw nut (3).

2. An electromagnetic shock absorber for a vehicle that comprises:
a vehicle mounting portion (T) configured to support the electromagnetic shock absorber relative to rotate to a vehicle body;
a vehicle body-side tube (1);
a vehicle axle-side tube (2) slidably inserted inside or outside the vehicle body-side tube (1) through bearing members (9,10);
an upper suspension spring receiver (7) attached to the vehicle body-side tube (1);
a lower suspension spring receiver (6) attached to the vehicle axle-side tube (2);
a motor (M) connected inside or outside the vehicle axle-side tube (2);
a ball screw nut (3) disposed inside the vehicle body-side tube (1), the ball screw nut (3) traveling together with the vehicle body-side tube (1);
a screw shaft (4) that is connected directly or through a power transmission device to a motor shaft (MS) of the motor (M) or that is formed integral with the motor shaft (MS), the screw shaft (4) being rotatably threaded into the ball screw nut (3),
a linear movement of the ball screw nut (3) being converted into a rotational movement of the screw shaft (4), which is transmitted to the motor shaft (MS), thereby to generate an electromagnetic force, and a torque caused by the electromagnetic force against rotation of the motor shaft (MS) is used as damping force for restricting the linear movement of the vehicle body-side tube (1); and
a rotation prevention device that prevents the vehicle axle-side tube (2) from rotating relative to the ball screw nut (3).

3. An electromagnetic shock absorber for a vehicle that comprises:
a vehicle mounting portion (T) configured to support the electromagnetic shock absorber relative to rotate to a vehicle body;
a vehicle body-side tube (1);
a vehicle axle-side tube (2) slidably inserted inside or outside the vehicle body-side tube (1) through bearing members (9,10);
an upper suspension spring receiver (7) attached to the vehicle body-side tube (1);
a lower suspension spring receiver (6) attached to the vehicle axle-side tube (2);
a shaft (S) rotatably inserted inside the vehicle body-side tube (1);
a coil wound (32) around the shaft (S);
a permanent magnet (31a, 31b) that is disposed opposite to the coil (32) in the vehicle body-side tube (1);
a ball screw nut (3) disposed inside the vehicle axle-side tube (2), the ball screw nut (3) traveling together with the vehicle axle-side tube (2);
a screw shaft (4) that is connected directly or through a power transmission device to the shaft (S) or that is formed integral with the shaft (S), the screw shaft (4) being rotatably threaded into the ball screw nut (3),
a linear movement of the ball screw nut (3) being converted into a rotational movement of the screw shaft (4), which is transmitted to the shaft (S), thereby to generate an electromagnetic force, and a torque caused by the electromagnetic force against rotation of the shaft (S) is used as damping force for restricting the linear movement of the vehicle axle-side tube (2); and
a rotation prevention device that prevents the vehicle body-side tube (1) from rotating relative to the ball screw nut (3).

4. An electromagnetic shock absorber for a vehicle that comprises:
a vehicle mounting portion (T) configured to support the electromagnetic shock absorber relative to rotate to a vehicle body;
a vehicle body-side tube (1);
a vehicle axle-side tube (2) slidably inserted inside or outside the vehicle body-side tube (1) through bearing members (9,10);
an upper suspension spring receiver (7) attached to the vehicle body-side tube (1);
a lower suspension spring receiver (6) attached to the vehicle axle-side tube (2);
a shaft (S) rotatably inserted inside the vehicle axle-side tube (2);
a coil (32) wound around the shaft (S):
a permanent magnet (31a, 31b) that is disposed opposite to the coil (32) in the vehicle axle-side tube (2);
a ball screw nut (3) disposed inside the vehicle body-side tube (1), the ball screw nut (3) traveling together with the vehicle body-side tube (1);
a screw shaft (4) that is connected directly or through a power transmission device to the shaft (S) or that is formed integral with the shaft (S), the screw shaft (4) being rotatably threaded into the ball screw nut (3),
a linear movement of the ball screw nut (3) being converted into a rotational movement of the screw shaft (4), which is transmitted to the shaft (S), thereby to generate an electromagnetic force, and a torque caused by the electromagnetic force against rotation of the shaft (S) is used as damping force for restricting the linear movement of the vehicle body-side tube (1); and
a rotation prevention device that prevents the vehicle axle-side tube (2) from rotating relative to the ball screw nut (3).

5. An electromagnetic shock absorber for a vehicle as set forth in claim 1 or 3, further comprising:
a connecting pipe (5) inserted inside the vehicle body-side tube (1), wherein
the ball screw nut (3) is connected to one end of the connecting pipe (5) and the other thereof is connected to the vehicle axle-side tube (2).

6. An electromagnetic shock absorber for a vehicle as set forth in claim 2 or 4, further comprising:
a connecting pipe (5) inserted inside the vehicle axle-side tube (2), wherein
the ball screw nut (3) is connected to one end of the connecting pipe (5) and the other thereof is connected to the vehicle body-side tube (1).

7. An electromagnetic shock absorber for a vehicle as set forth in claim 1 or 3, wherein the vehicle mounting portion (T) is equipped with the upper suspension spring receiver (7) connected between the vehicle body-side tube (1) and a motor; and
a suspension spring (8) is inserted between the upper suspension spring receiver (7) and the lower suspension spring receiver (6).

8. An electromagnetic shock absorber for a vehicle as set forth in claim 1, 2, 3, or 4, wherein the vehicle mounting portion (T) is equipped with the upper suspension spring receiver (7) attached to a tip of the vehicle body-side tube (1) and a motor; and
a suspension spring (8) is inserted between the upper suspension spring receiver (7) and the lower suspension spring receiver (6).

9. An electromagnetic shock absorber for a vehicle as set forth in claim 1, 2, 3, or 4, wherein the vehicle mounting portion (T) comprises:
a bracket (17, 18) that connects the vehicle mounting portion (T) to a vehicle;
a bush (15) held and supported by the bracket (17, 18); and
a rolling bearing (16) held and supported by the bush (15), wherein
the upper suspension spring receiver (7) is attached to the bracket (17, 18), and
the vehicle body-side tube (1) or the motor (M) is fitted in an inner surface of the rolling bearing (16).

## Patentansprüche

1. Elektromagnetischer Stoßdämpfer für ein Fahrzeug, der aufweist:
einen Fahrzeug- Montageabschnitt (T), konfiguriert, den elektromagnetischen Stoßdämpfer drehbar in Bezug eine Fahrzeugkarosserie zu lagern;
ein fahrzeugkarosserieseitiges Rohr (1);
ein fahrzeugachsseitiges Rohr (2), gleitbar eingesetzt innerhalb oder außerhalb des fahrzeugkarosserieseitigen Rohres (1) durch Lagerteile (9, 10);
einen oberen Aufhängungs- Federaufnehmer (7), verbunden mit dem fahrzeugkarosserieseitigen Rohr (1);
einen unteren Aufhängungs- Federaufnehmer (6), verbunden mit dem fahrzeugachsseitigen Rohr (2);
einen Motor (M), verbunden innerhalb oder außerhalb des fahrzeugkarosserieseitigen Rohres (1);
eine Kugelspindelmutter (3), angeordnet innerhalb des fahrzeugachsseitigen Rohres (2), wobei sich die Kugelspindelmutter (3) gemeinsam mit dem fahrzeugachsseitiges Rohr (2) bewegt;
eine Schraubenwelle (4), die direkt oder durch eine Leistungsübertragungsvorrichtung mit einer Motorwelle (MS) des Motors (M) verbunden ist, oder die einstückig mit der Motorwelle (MS) gebildet ist, wobei die Schraubenwelle (4) drehbar in die Kugelspindelmutter (3) eingesetzt ist,
eine Linearbewegung der Kugelspindelmutter (3) in eine Drehbewegung der Schraubenwelle (4) umgewandelt wird, die auf die Motorwelle (MS) übertragen wird, um dadurch eine elektromagnetische Kraft zu erzeugen und ein Drehmoment, verursacht durch die elektromagnetische Kraft gegen die Drehung der Motorwelle (MS), als eine Dämpfungskraft verwendet wird, zum Begrenzen der Linearbewegung des fahrzeugachsseitigen Rohres (2); und
eine Drehverhinderungsvorrichtung, die das fahrzeugkarosserieseitige Rohr (1) an der Drehung in Bezug auf die Kugelspindelmutter (3) hindert.

2. Elektromagnetischer Stoßdämpfer für ein Fahrzeug, der aufweist:
einen Fahrzeug- Montageabschnitt (T), konfiguriert, den elektromagnetischen Stoßdämpfer drehbar in Bezug auf eine Fahrzeugkarosserie zu lagern;
ein fahrzeugkarosserieseitiges Rohr (1);
ein fahrzeugachsseitiges Rohr (2), gleitbar eingesetzt innerhalb oder außerhalb des fahrzeugkarosserieseitigen Rohres (1) durch Lagerteile (9, 10);
einen oberen Aufhängungs- Federaufnehmer (7), verbunden mit dem fahrzeugkarosserieseitigen Rohr (1);
einen unteren Aufhängungs- Federaufnehmer (6), verbunden mit dem fahrzeugachsseitigen Rohr (2);
einen Motor (M), verbunden innerhalb oder außerhalb des fahrzeugachsseitigen Rohres (2);
eine Kugelspindelmutter (3), angeordnet innerhalb des fahrzeugkarosserieseitigen Rohres (1), wobei sich die Kugelspindelmutter (3) gemeinsam mit dem fahrzeugkarosserieseitigen Rohr (1) bewegt;
eine Schraubenwelle (4), die direkt oder durch eine Leistungsübertragungsvorrichtung mit einer Motorwelle (MS) des Motors (M) verbunden ist, oder die einstückig mit der Motorwelle (MS) gebildet ist, wobei die Schraubenwelle (4) drehbar in die Kugelspindelmutter (3) eingesetzt ist,
eine Linearbewegung der Kugelspindelmutter (3) in eine Drehbewegung der Schraubenwelle (4) umgewandelt wird, die auf die Motorwelle (MS) übertragen wird, um dadurch eine elektromagnetische Kraft zu erzeugen und ein Drehmoment, verursacht durch die elektromagnetische Kraft, gegen die Drehung der Motorwelle (MS), als eine Dämpfungskraft verwendet wird, zum Begrenzen der Linearbewegung des fahrzeugkarosserieseitigen Rohres (1); und
eine Drehverhinderungsvorrichtung, die das fahrzeugachsseitige Rohr (2) an der Drehung in Bezug auf die Kugelspindelmutter (3) hindert.

3. Elektromagnetischer Stoßdämpfer für ein Fahrzeug, der aufweist:
einen Fahrzeug- Montageabschnitt (T), konfiguriert, den elektromagnetischen Stoßdämpfer drehbar in Bezug auf eine Fahrzeugkarosserie zu lagern;
ein fahrzeugkarosserieseitiges Rohr (1);
ein fahrzeugachsseitiges Rohr (2), gleitbar eingesetzt innerhalb oder außerhalb des fahrzeugkarosserieseitigen Rohres (1) durch Lagerteile (9, 10);
einen oberen Aufhängungs- Federaufnehmer (7), verbunden mit dem fahrzeugkarosserieseitigen Rohr (1);
einen unteren Aufhängungs- Federaufnehmer (6), verbunden mit dem fahrzeugachsseitigen Rohr (2);
eine Welle (S), drehbar eingesetzt innerhalb des fahrzeugkarosserieseitigen Rohres (1);
eine Spule (32), die um die Welle (S) gewickelt ist;
einen Permanentmagnet (31 a, 31 b), der gegenüberliegend zu der Spule (32) in dem fahrzeugkarosserieseitigen Rohr (1) angeordnet ist;
eine Kugelspindelmutter (3), angeordnet innerhalb des fahrzeugachsseitigen Rohres (2), wobei sich die Kugelspindelmutter (3) gemeinsam mit dem fahrzeugachsseitigen Rohr (2) bewegt;
eine Schraubenwelle (4), die direkt oder durch eine Leistungsübertragungsvorrichtung mit einer Motorwelle (MS) des Motors (M) verbunden ist, oder die einstückig mit der Welle (S) gebildet ist, wobei die Schraubenwelle (4) drehbar in die Kugelspindelmutter (3) eingesetzt ist,
eine Linearbewegung der Kugelspindelmutter(3) in eine Drehbewegung der Schraubenwelle (4) umgewandelt wird, die auf die Welle (S) übertragen wird, um dadurch eine elektromagnetische Kraft zu erzeugen und ein Drehmoment, verursacht durch die elektromagnetische Kraft gegen die Drehung der Welle (S), als eine Dämpfungskraft verwendet wird zum Begrenzen der Linearbewegung des fahrzeugachsseitigen Rohres (2); und
eine Drehverhinderungsvorrichtung, die das fahrzeugkarosserieseitige Rohr (1) an der Drehung in Bezug auf die Kugelspindelmutter (3) hindert.

4. Elektromagnetischer Stoßdämpfer für ein Fahrzeug, der aufweist:
einen Fahrzeugmontageabschnitt (T), konfiguriert, den elektromagnetischen Stoßdämpfer drehbar in Bezug auf eine Fahrzeugkarosserie zu lagern;
ein fahrzeugkarosserieseitiges Rohr (1);
ein fahrzeugachsseitiges Rohr (2), gleitbar eingesetzt innerhalb oder außerhalb des fahrzeugkarosserieseitigen Rohres (1) durch Lagerteile (9, 10);
einen oberen Aufhängungs- Federaufnehmer (7), verbunden mit dem fahrzeugkarosserieseitigen Rohr (1);
einen unteren Aufhängungs- Federaufnehmer (6), verbunden mit dem fahrzeugachsseitigen Rohr (2);
eine Welle (S), drehbar eingesetzt innerhalb des fahrzeugkarosserieseitigen Rohres (1);
eine Spule (32), die um die Welle (S) gewickelt ist;
einen Permanentmagnet (31 a, 31 b), der gegenüberliegend zu der Spule (32) in dem fahrzeugachsseitigen Rohr (2) angeordnet ist;
eine Kugelspindelmutter (3), angeordnet innerhalb des fahrzeugachsseitigen Rohres (2), wobei sich die Kugelspindelmutter (3) gemeinsam mit dem fahrzeugachsseitigen Rohr (2) bewegt;
eine Schraubenwelle (4), die direkt oder durch eine Leistungsübertragungsvorrichtung mit der Welle (S) verbunden ist, oder die einstückig mit der Welle (S) gebildet ist, wobei die Schraubenwelle (4) drehbar in die Kugelspindelmutter (3) eingesetzt ist,
eine Linearbewegung der Kugelspindelmutter(3) in eine Drehbewegung der Schraubenwelle (4) umgewandelt wird, die auf die Welle (S) übertragen wird, um dadurch eine elektromagnetische Kraft zu erzeugen und ein Drehmoment, verursacht durch die elektromagnetische Kraft gegen die Drehung der Welle (S), als eine Dämpfungskraft verwendet wird zum Begrenzen der Linearbewegung des fahrzeugkarosserieseitigen Rohres (1); und
eine Drehverhinderungsvorrichtung, die das fahrzeugachsseitige Rohr (2) an der Drehung in Bezug auf die Kugelspindelmutter (3) hindert.

5. Elektromagnetischer Stoßdämpfer für ein Fahrzeug nach Anspruch 1 oder 3, außerdem aufweisend:
ein Verbindungsrohr (5) eingesetzt in das fahrzeugkarosserieseitige Rohr (1), wobei die Kugelspindelmutter (3) mit einem Ende des Verbindungsrohres (5) verbunden ist, und dessen anderes Ende mit dem fahrzeugachsseitigen Rohr (2) verbunden ist.

6. Elektromagnetischer Stoßdämpfer für ein Fahrzeug nach Anspruch 2 oder 4, außerdem aufweisend:
ein Verbindungsrohr (5), eingesetzt in das fahrzeugachsseitige Rohr (2), wobei die Kugelspindelmutter (3) mit einem Ende des Verbindungsrohres (5) verbunden ist und dessen anderes Ende mit dem fahrzeugkarosserieseitigen Rohr (1) verbunden ist.

7. Elektromagnetischer Stoßdämpfer für ein Fahrzeug nach Anspruch 1 oder 3, wobei der Fahrzeug- Montageabschnitt (T) mit einem oberen Aufhängungs- Federaufnehmer (7) ausgerüstet ist, verbunden zwischen dem fahrzeugkarosserieseitigen Rohr (1) und einem Motor,
und
eine Aufhängungsfeder (8) zwischen den oberen Aufhängungs- Federaufnehmer (7) und dem unteren Aufhängungs- Federaufnehmer (6) eingesetzt ist.

8. Elektromagnetischer Stoßdämpfer für ein Fahrzeug nach Anspruch 1, 2, 3 oder 4, wobei der Fahrzeug- Montageabschnitt (T) ausgerüstet ist mit dem oberen Aufhängungs- Federaufnehmer (7), verbunden mit einer Spitze des fahrzeugkarosserieseitigen Rohres (1) und einem Motor;
und
eine Aufhängungsfeder (8) eingesetzt ist zwischen den oberen Aufhängungs- Federaufnehmer (7) und den unteren Aufhängungs- Federaufnehmer (6).

9. Elektromagnetischer Stoßdämpfer für ein Fahrzeug nach Anspruch 1, 2, 3 oder 4, wobei der Fahrzeug- Montageabschnitt (T) aufweist:
einen Halter (17, 18), der den Fahrzeug- Montageabschnitt (T) mit einem Fahrzeug verbindet;
eine Hülse (15), gehalten und gelagert durch den Halter (17, 18); und
ein Rolllager (16), gehalten und gelagert durch die Hülse (15), wobei der obere Aufhängungs- Federaufnehmer (7) mit dem Halter (17, 18) verbunden ist, und
das fahrzeugkarosserieseitige Rohr (1) oder der Motor (M) in eine innere Oberfläche des Rolllagers (16) eingesetzt ist.

## Revendications

1. Amortisseur électromagnétique pour un véhicule qui comprend :
une partie de montage sur véhicule (T) configurée pour supporter l'amortisseur électromagnétique en ce qui concerne une rotation par rapport à une carrosserie de véhicule ;
un tube côté carrosserie de véhicule (1) ;
un tube côté essieu de véhicule (2) inséré de manière coulissante à l'intérieur ou à l'extérieur du tube côté carrosserie de véhicule (1) par l'intermédiaire d'éléments formant paliers (9, 10) ;
un récepteur de ressort de suspension supérieur (7) attaché au tube côté carrosserie de véhicule (1) ;
un récepteur de ressort de suspension inférieur (6) attaché au tube côté essieu de véhicule (2) ;
un moteur (M) relié à l'intérieur ou à l'extérieur du tube côté carrosserie de véhicule (1) ;
un écrou de vis à billes (3) disposé à l'intérieur du tube côté essieu de véhicule (2), l'écrou de vis à billes (3) se déplaçant en même temps que le tube côté essieu de véhicule (2) ;
un arbre fileté (4) qui est relié directement ou par l'intermédiaire d'un dispositif de transmission de puissance à un arbre de moteur (MS) du moteur (M) ou qui est formé d'un seul tenant avec l'arbre de moteur (MS), l'arbre fileté (4) étant vissé en rotation dans l'écrou de vis à billes (3),
un mouvement linéaire de l'écrou de vis à billes (3) étant transformé en un mouvement rotatif de l'arbre fileté (4), qui est transmis à l'arbre de moteur (MS), produisant ainsi une force électromagnétique, et un couple provoqué par la force électromagnétique contre la rotation de l'arbre de moteur (MS) est utilisé en tant que force d'amortissement pour limiter le mouvement linéaire du tube côté essieu de véhicule (2) ; et
un dispositif de prévention de rotation qui empêche le tube côté carrosserie de véhicule (1) de tourner par rapport à l'écrou de vis à billes (3).

2. Amortisseur électromagnétique pour un véhicule qui comprend :
une partie de montage sur véhicule (T) configurée pour supporter l'amortisseur électromagnétique en ce qui concerne une rotation par rapport à une carrosserie de véhicule ;
un tube côté carrosserie de véhicule (1) ;
un tube côté essieu de véhicule (2) inséré de manière coulissante à l'intérieur ou à l'extérieur du tube côté carrosserie de véhicule (1) par l'intermédiaire d'éléments formant paliers (9, 10) ;
un récepteur de ressort de suspension supérieur (7) attaché au tube côté carrosserie de véhicule (1) ;
un récepteur de ressort de suspension inférieur (6) attaché au tube côté essieu de véhicule (2) ;
un moteur (M) relié à l'intérieur ou à l'extérieur du tube côté essieu de véhicule (2) ;
un écrou de vis à billes (3) disposé à l'intérieur du tube côté carrosserie de véhicule (1), l'écrou de vis à billes (3) se déplaçant en même temps que le tube côté carrosserie de véhicule (1) ;
un arbre fileté (4) qui est relié directement ou par l'intermédiaire d'un dispositif de transmission de puissance à un arbre de moteur (MS) du moteur (M) ou qui est formé d'un seul tenant avec l'arbre de moteur (MS), l'arbre fileté (4) étant vissé en rotation dans l'écrou de vis à billes (3),
un mouvement linéaire de l'écrou de vis à billes (3) étant transformé en un mouvement rotatif de l'arbre fileté (4), qui est transmis à l'arbre de moteur (MS), produisant ainsi une force électromagnétique, et un couple provoqué par la force électromagnétique contre la rotation de l'arbre de moteur (MS) est utilisé en tant que force d'amortissement pour limiter le mouvement linéaire du tube côté carrosserie de véhicule (1) ; et
un dispositif de prévention de rotation qui empêche le tube côté essieu de véhicule (2) de tourner par rapport à l'écrou de vis à billes (3).

3. Amortisseur électromagnétique pour un véhicule qui comprend :
une partie de montage sur véhicule (T) configurée pour supporter l'amortisseur électromagnétique en ce qui concerne une rotation par rapport à une carrosserie de véhicule ;
un tube côté carrosserie de véhicule (1) ;
un tube côté essieu de véhicule (2) inséré de manière coulissante à l'intérieur ou à l'extérieur du tube côté carrosserie de véhicule (1) par l'intermédiaire d'éléments formant paliers (9, 10) ;
un récepteur de ressort de suspension supérieur (7) attaché au tube côté carrosserie de véhicule (1) ;
un récepteur de ressort de suspension inférieur (6) attaché au tube côté essieu de véhicule (2) ;
un arbre (S) inséré en rotation à l'intérieur du tube côté carrosserie de véhicule (1) ;
une bobine (32) enroulée autour de l'arbre (S) ;
un aimant permanent (31a, 31b) qui est disposé en face de la bobine (32) dans le tube côté carrosserie de véhicule (1) ;
un écrou de vis à billes (3) disposé à l'intérieur du tube côté essieu de véhicule (2), l'écrou de vis à billes (3) se déplaçant en même temps que le tube côté essieu de véhicule (2) ;
un arbre fileté (4) qui est relié directement ou par l'intermédiaire d'un dispositif de transmission de puissance à l'arbre (S) ou qui est formé d'un seul tenant avec l'arbre (S), l'arbre fileté (4) étant vissé en rotation dans l'écrou de vis à billes (3),
un mouvement linéaire de l'écrou de vis à billes (3) étant transformé en un mouvement rotatif de l'arbre fileté (4), qui est transmis à l'arbre (S), produisant ainsi une force électromagnétique, et un couple provoqué par la force électromagnétique contre la rotation de l'arbre (S) est utilisé en tant que force d'amortissement pour limiter le mouvement linéaire du tube côté essieu de véhicule (2) ; et
un dispositif de prévention de rotation qui empêche le tube côté carrosserie de véhicule (1) de tourner par rapport à l'écrou de vis à billes (3).

4. Amortisseur électromagnétique pour un véhicule qui comprend :
une partie de montage sur véhicule (T) configurée pour supporter l'amortisseur électromagnétique en ce qui concerne une rotation par rapport à une carrosserie de véhicule ;
un tube côté carrosserie de véhicule (1) ;
un tube côté essieu de véhicule (2) inséré de manière coulissante à l'intérieur ou à l'extérieur du tube côté carrosserie de véhicule (1) par l'intermédiaire d'éléments formant paliers (9, 10) ;
un récepteur de ressort de suspension supérieur (7) attaché au tube côté carrosserie de véhicule (1) ;
un récepteur de ressort de suspension inférieur (6) attaché au tube côté essieu de véhicule (2) ;
un arbre (S) inséré en rotation à l'intérieur du tube côté essieu de véhicule (2) ;
une bobine (32) enroulée autour de l'arbre (S) ;
un aimant permanent (31a, 31b) qui est disposé en face de la bobine (32) dans le tube côté essieu de véhicule (2) ;
un écrou de vis à billes (3) disposé à l'intérieur du tube côté carrosserie de véhicule (1), l'écrou de vis à billes (3) se déplaçant en même temps que le tube côté carrosserie de véhicule (1) ;
un arbre fileté (4) qui est relié directement ou par l'intermédiaire d'un dispositif de transmission de puissance à l'arbre (S) ou qui est formé d'un seul tenant avec l'arbre (S), l'arbre fileté (4) étant vissé en rotation dans l'écrou de vis à billes (3),
un mouvement linéaire de l'écrou de vis à billes (3) étant transformé en un mouvement rotatif de l'arbre fileté (4), qui est transmis à l'arbre (S), produisant ainsi une force électromagnétique, et un couple provoqué par la force électromagnétique contre la rotation de l'arbre (S) est utilisé en tant que force d'amortissement pour limiter le mouvement linéaire du tube côté carrosserie de véhicule (1) ; et
un dispositif de prévention de rotation qui empêche le tube côté essieu de véhicule (2) de tourner par rapport à l'écrou de vis à billes (3).

5. Amortisseur électromagnétique pour un véhicule selon la revendication 1 ou 3, comprenant en outre :
un tuyau de connexion (5) inséré à l'intérieur du tube côté carrosserie de véhicule (1), dans lequel
l'écrou de vis à billes (3) est relié à une extrémité du tuyau de connexion (5) et l'autre extrémité de ce dernier est reliée au tube côté essieu de véhicule (2).

6. Amortisseur électromagnétique pour un véhicule selon la revendication 2 ou 4, comprenant en outre :
un tuyau de connexion (5) inséré à l'intérieur du tube côté essieu de véhicule (2), dans lequel
l'écrou de vis à billes (3) est relié à une extrémité du tuyau de connexion (5) et l'autre extrémité de ce dernier est reliée au tube côté carrosserie de véhicule (1).

7. Amortisseur électromagnétique pour un véhicule selon la revendication 1 ou 3, dans lequel la partie de montage sur véhicule (T) est équipée du récepteur de ressort de suspension supérieur (7) relié entre le tube côté carrosserie de véhicule (1) et un moteur ; et
un ressort de suspension (8) est inséré entre le récepteur de ressort de suspension supérieur (7) et le récepteur de ressort de suspension inférieur (6).

8. Amortisseur électromagnétique pour un véhicule selon la revendication 1, 2, 3, ou 4, dans lequel la partie de montage sur véhicule (T) est équipée du récepteur de ressort de suspension supérieur (7) attaché à un bout du tube côté carrosserie de véhicule (1) et à un moteur ; et
un ressort de suspension (8) est inséré entre le récepteur de ressort de suspension supérieur (7) et le récepteur de ressort de suspension inférieur (6).

9. Amortisseur électromagnétique pour un véhicule selon la revendication 1, 2, 3, ou 4, dans lequel la partie de montage sur véhicule (T) comprend :
une patte d'attache (17, 18) qui relie la partie de montage sur véhicule (T) à un véhicule ;
une douille (15) maintenue et supportée par la patte d'attache (17, 18) ; et
un palier à roulement (16) maintenu et supporté par la douille (15), dans lequel
le récepteur de ressort de suspension supérieur (7) est attaché à la patte d'attache (17, 18), et le tube côté carrosserie de véhicule (1) ou le moteur (M) est ajusté dans une surface intérieure du palier à roulement (16).
